Europäisches Patentamt

European Patent Office

Office européen des brevets

(19)

(11) Veröffentlichungsnummer : **0 047 875
B1**

(12) **EUROPÄISCHE PATENTSCHRIFT**

(45) Veröffentlichungstag der Patentschrift :
**09.10.85**

(21) Anmeldenummer : **81106450.0**

(22) Anmeldetag : **19.08.81**

(51) Int. Cl.⁴ : **G 21 C 19/06**

(54) **Zwischenlager für radioaktives Material.**

(30) Priorität : **16.09.80 DE 3034821**

(43) Veröffentlichungstag der Anmeldung :
**24.03.82 Patentblatt 82/12**

(45) Bekanntmachung des Hinweises auf die Patenterteilung : **09.10.85 Patentblatt 85/41**

(84) Benannte Vertragsstaaten :
**BE CH DE FR GB LI SE**

(56) Entgegenhaltungen :
**DE-B- 1 257 299
FR-A- 1 423 093
FR-A- 2 254 860
FR-A- 2 258 692
FR-A- 2 375 696
FR-E- 87 992
US-A- 2 935 616
US-A- 3 962 587**

(73) Patentinhaber : **TRANSNUKLEAR GmbH
Postfach 11 00 30 Rodenbacher Chaussee 6
D-6450 Hanau 11 (DE)**

(72) Erfinder : **Brendel, Karl, Ing. grad.
Luisenstrasse 21
D-6052 Mühlheim/Main (DE)**
Erfinder : **Christ, Richard, Dr.
August-Bebel-Strasse 20
D-6451 Bruchköbel (DE)**
Erfinder : **Kohlpoth, Walter, Ing. grad.
Waldstrasse 324
D-6050 Offenbach (DE)**
Erfinder : **Kroll, Hartmut, Dipl.-Phys.
Gausstrasse 6
D-6450 Hanau 1 (DE)**
Erfinder : **Loosz, Jürgen
Hintergasse 10a
D-6456 Langenselbold (DE)**

## Beschreibung

Gegenstand der vorliegenden Erfindung ist ein Zwischenlager für radioaktives Material, insbesondere für Behälter mit Dicht- und Abschirmfunktion für bestrahlte Brennelemente aus Kernreaktoren, wobei das Lager aus die Behälter umschließenden Lagerelementen besteht, und die Lagerelemente aus im Querschnitt runden oder eckigen übereinandergesetzten Rohrabschnitten und einem Deckel zusammengesetzt sind.

Bestrahlte bzw. abgebrannte Brennelemente und hochradioaktiver Abfall müssen nach ihrem Einsatz im Kernreaktor bis zu ihrer Wiederaufarbeitung bzw. zur Endlagerung zwischengelagert werden. Dieses erfolgt in Naß- oder zunehmend auch in Trockenlagern, die entsprechend ausgelegt sein müssen. In diesen Zwischenlagern werden die Brennelemente, z. T. in Büchsen befindlich, vorzugsweise in sogenannten Lagergestellen aufbewahrt. Dementsprechend sind die Lagergebäude gegen äußere Einwirkung wie Erdbeben, Flugzeugabsturz, sowie Kühlungbehinderungen und andere Ereignisse sicher ausgelegt.

Es sind aber auch Lager bekannt, in denen die Brennelemente nach ihrem Antransport in kombinierten Transport-/Lagerbehältern verbleiben. Da durch die Anhäufung von Behältern in einem solchen Lager die Abschirmfunktion der Behälter nicht ausreicht, muß das Lagergebäude trotzdem noch zusätzlich strahlungsabschirmende Eigenschaften aufweisen.

Ein wesentlicher Nachteil der geschilderten Zwischenlager ist, daß sie aus relativ großvolumigen Gebäuden bestehen, die kostenaufwendig gebaut werden müssen, und deren Abriß bei Stillegung schwierig und mit erheblichem Aufwand verbunden sein kann. Auch sind Lagererweiterungsmöglichkeiten gebäudeseitig begrenzt. Der Schutz gegen äußere Einwirkungen ist bei dieser Bauweise sehr begrenzt, die Schutzfunktion muß voll vom Transport/Lagerbehälter übernommen werden, was eine entsprechende aufwendige Bauweise der Behälter bedeutet.

Aus der US-A-2935616 sind an sich Behälter für radioaktive Materialien bekannt, deren Abmessungen variabel sind, und die aus mehreren übereinandergesetzten Elementen zusammengesetzt sind.

Der vorliegenden Erfindung lag daher die Aufgabe zugrunde, ein Zwischenlager für radioaktives Material, insbesondere für Behälter mit Dicht- und Abschirmfunktion für bestrahlte Brennelemente aus Kernreaktoren zu schaffen, wobei das Lager aus die Behälter umschließenden Lagerelementen besteht, und die Lagerelemente aus im Querschnitt runden oder eckigen, übereinandergesetzten Rohrabschnitten und einem Deckel zusammengesetzt sind, das kostengünstig aufgebaut, schnell — den jeweiligen Erfordernissen angepaßt — umgebaut oder erweitert und ohne besondere Schwierigkeiten abgebaut und an anderer Stelle wiederaufgebaut werden kann.

Die Aufgabe wurde erfindungsgemäß dadurch gelöst, daß mehrere Lagerelemente über Verbindungselemente zu Gruppen zusammengefasst, mit einer gemeinsam abnehmbaren Betonplatte bedeckt und von Strahlungsabschirmungsbarrieren umgeben sind. Vorzugsweise bestehen die Rohrabschnitte aus Beton, insbesondere aus Strahlenschutzbeton. Durch diese Anordnung wird gleichzeitig ein verbesserter Schutz gegen äußere Einwirkungen erzielt.

Günstig ist es außerdem, wenn die Rohrabschnitte aus zylindermantelförmigen Kreisringen bestehen und der Deckel gegenüber den Kreisringen eine Überstand aufweist.

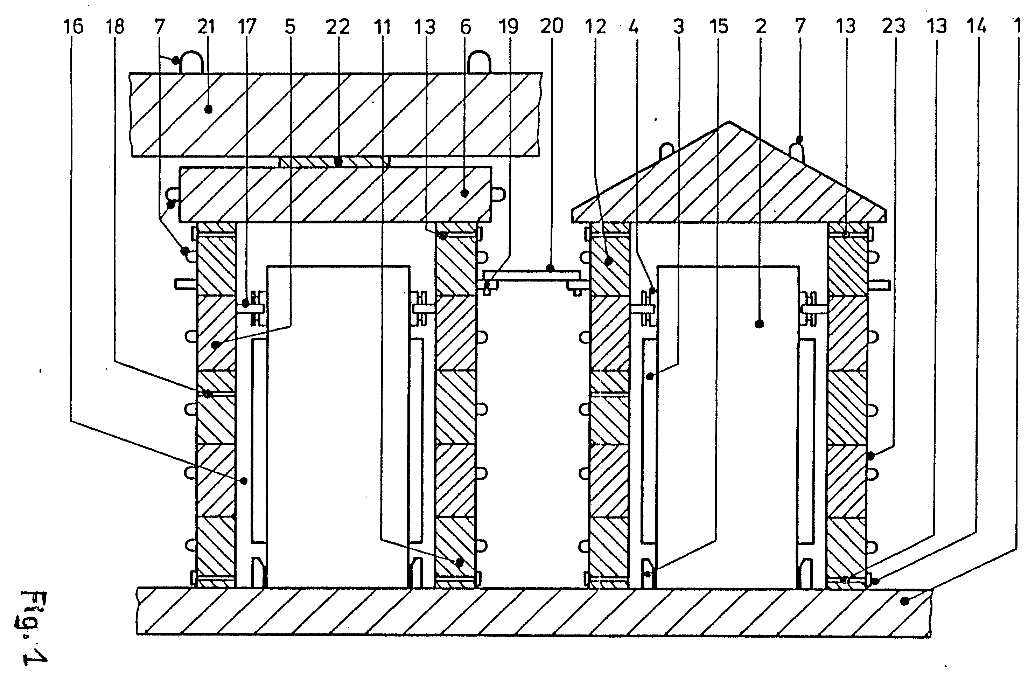

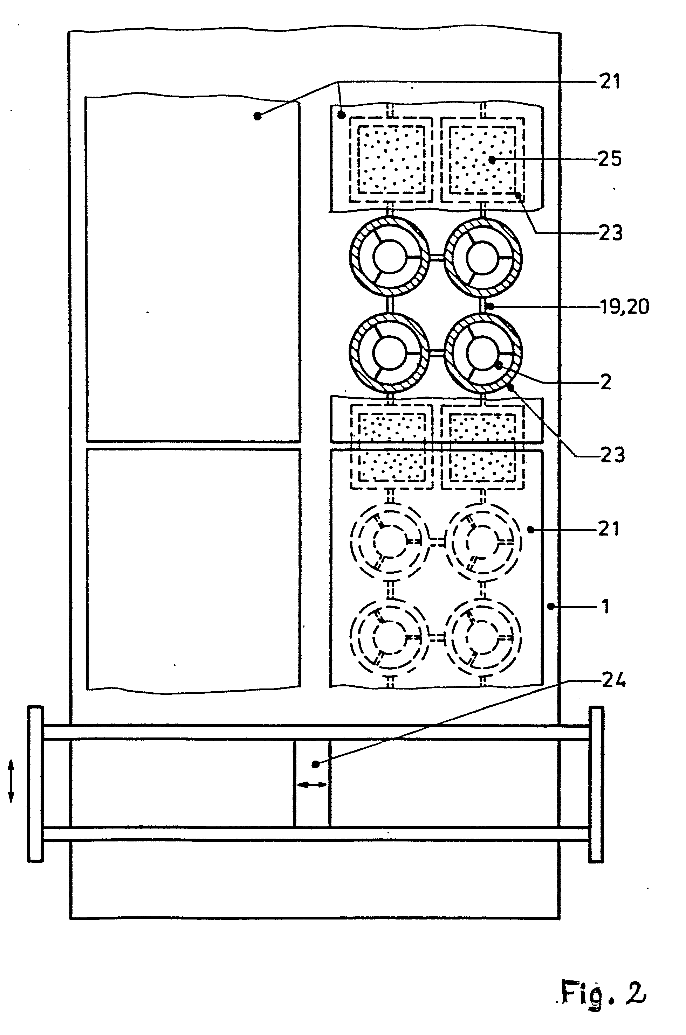

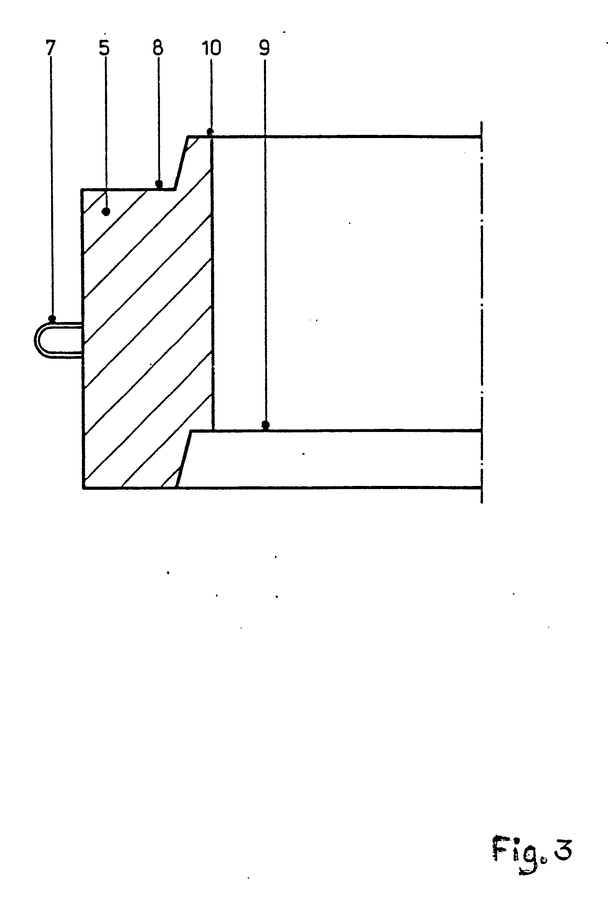

Das erfindungsgemäße Zwischenlager ist nachstehend anhand der schematischen Abb. 1 bis 3 beispielhaft näher erläutert. Auf einer Bodenplatte 1 stehen Transport-/Lagerbehälter 2 mit Kühlrippen 3 und Tragzapfen 4, umgeben von übereinandergesetzten Betonrohrabschnitten 5. Der gesamte Aufbau ist oben durch einen eingepaßten Deckel 6 abgedeckt. Der Deckel 6 besteht zweckmäßigerweise ebenfalls aus Beton, der, wie auch die Rohrabschnitte 5 bewehrt sein kann. Vorteilhaft ist es, wenn der Deckel 6 gegenüber den Betonsegmenten 5 aus Witterungsründen einen Überstand hat. Ebenfalls günstig ist die Gestaltung der Rohrabschnitte 5 als zylindermantelförmige Kreisringe, sowie die Verwendung von Strahlenschutzbeton für den Fall, daß die Behälter 2 nur eine teilweise Strahlenschutzfunktion aufweisen. Die Wandstärke der Rohrabschnitte 5 beträgt bei gut bewehrtem hochverdichtetem Beton bei der Aufbewahrung von kombinierten Transport-/Lagerbehältern etwa 0,25-0,5 m. Die Rohrabschnitte 5 können sowohl ringförmig sein als auch eine eckige Ausgestaltung besitzen, wie z. B. eine quadratisch oder eine hexagonale Form. Auch können die Rohrabschnitte 5 aus einem Stück gefertigt sein oder sich aus mehreren aneinandergefügten Einzelsegmenten zusammensetzen. Die Höhe der einzelnen Rohrabschnitte 5 ist freibleibend und nur vom noch beherrschbaren Gewicht und den Transportmöglichkeiten abhängig.

Letzten Endes hängt die jeweilige Auslegung der Rohrabschnitte 5 jedoch von den speziellen Gegebenheiten ab, wobei es aus Rationalisierungsgründen zweckmäßig ist, alle Teile maximal in bezug auf Abschirmwirkung auszulegen. Die Betonringe 5 können mit einfachen Hebezeugen mittels Haken bzw. Griffen 7 übereinandergestellt werden, wobei die Stirnseiten 8 der Ringe 5 nut- und federartig angeformte Paßteile 9, 10 aufweisen, die einen sicheren stabilen Sitz gewährleisten. Andere Paßteile und- formen sind ebenfalls möglich. Auch der Deckel 6 besitzt Einrichtungen 7 zum Hantieren. Zumindest im unteren Ring 11 und im oberen Ring 12 unter dem Deckel 6 sind vorzugsweise Öffnungen 13 vorhanden, die in entsprechender Größe den Zustrom bzw. die Abfuhr von Kühlluft sicherstellen.

Die Öffnungen 13 können durch Gitter bzw. Siebgeflecht 14 geschützt sein. Bei stark abgeklungenen radioaktivem Inventar kann jedoch auf die Öffnungen 13 teilweise oder gegebenenfalls völlig verzichtet werden.

Innerhalb der Rohrabschnitte 5 können sich dem jeweiligen Behältertyp angepaßte Zentriereinrichtungen 15 befinden, die einmal für die zentrische Unterbringung der Behälter 2 innerhalb des von den Rohrabschnitten 5 gebildetem Raumes 16 sorgen, zum anderen auch als Kippsicherung für den Behälter 2 dienen. Dieselbe Funktion haben Abstandshalter 17, die beispielsweise mit Aussparungen unter die Tragzapfen 4 geschoben oder auf den oberen Kühlrippenrand gelegt sind. Die Zentriereinrichtung 15 ist auf der Bodenplatte 1 befestigt, sie kann aber auch in die Bodenplatte 1 eingelassen sein.

Außer aus Beton können die Rohrabschnitte 5 natürlich auch aus anderen Materialien bestehen, wie z. B. aus Stahl. In den von den Rohrabschnitten 5 gebildeten Innenraum 16 der Lagerelemente 23 können ein oder mehrere Behälter 2 mit radioaktivem Material untergebracht werden, nebeneinander oder übereinander angeordnet.

Es kann vorteilhaft sein den Deckel 6 aus Sicherheitsgründen kegelförmig zu gestalten. Weitere verschließbare Öffnungen 18 durch die Rohrabschnitte 5 in den Innenraum 16 dienen der Inspektion bzw. der Durchführung von Meßleitungen.

Am Außenumfang der Rohrabschnitte 5 befinden sich Befestigungselemente 19, an die Verbindungselemente 20 zum gegenseitigen Befestigen bzw. Abstandsfixieren benachbarter Lagerelemente 23 montiert werden. Dadurch enthält die aus mehreren Lagerelementen 23 gebildete Lagergruppe vorteilhafterweise eine zusätzliche Stabilität, z. B. gegen Erdbeben. Die Verbindungselemente 20 sichern als Abstandshalter auch die erforderliche Zuführung des Kühlluftstromes. Zweckmäßig ist die Schaffung von Lagergruppen aus zweireihigen Lagerelementen 23, jedoch sind auch andere Gruppenanordnungen möglich. Die Lagergruppen werden mit einer abnehmbaren starken Betonplatte 21 abgedeckt, die fallweise auch mit einem Dämpfungsschutz gegen große, herabfallende Gegenstände versehen sein kann. Es ist dabei sinnvoll, die Größe des Lagerensembles so zu wählen, daß die mit Ösen versehene Betonplatte 21 durch geeignete Hebezeuge 24 handhabbar ist. Je nach Dicke der Deckel 6 liegt die Betonplatte 21 direkt auf ihnen auf oder aber, um die aufsteigende Kühlluft nicht zu behindern, auf Auflagern 22. Auch kann die Betonplatte 21 mit geeigneten kaminartigen Kanälen oder ähnlichen Einrichtungen durchsetzt sein. Weiterhin sind die Lagerelemente 23 von Strahlenabschirmungsbarrieren umgeben, die vorzugsweise ebenfalls aus Lagerelementen 23 bestehen und mit nichtradioaktivem Schüttgut 25, wie z. B. Sand, gefüllt sind.

Das erfindungsgemäße Zwischenlager eignet sich insbesondere vorzüglich als Freilager. Es ist schnell auf- und abbaubar, ferner bietet es durch seine variablen Möglichkeiten eine schnelle Anpassung an unterschiedliche Anforderungen. Alle Teile sind — da als Bausteine in großer Zahl vorhanden — billig und mit gleichbleibender Qualität herstellbar und wären normierbar, auch hinsichtlich eines standardisierten Lagers. Zweigeschossiges bzw. mehrgeschossiges Lagern ist fallweise durchführbar.

Aber auch in Kavernen und in bereits vorhandenen kerntechnischen Anlagen sind die Lagerelemente 23 als Zwischenlager leicht installierbar, ebenso wegen der mobilen Bauweise auch für vorübergehende unvorhergesehene Zwischenlagerung von Transportbehältern. Bei geplanter Lagerung in Transport-/Lagerbehältern ist durch die hohe Schutzfunktion der Betonelemente gegen äußere Einwirkungen ein gewisser Abbau der entsprechenden Funktion des Behälters und damit eine Vereinfachung (= Verbilligung) des Behälters möglich.

Fallweise, vor allem bei Behältern mit geringer Höhe, kann das Lagerelement 23 nur einen Rohrabschnitt 5 enthalten.

**Patentansprüche**

1. Zwischenlager für radioaktives Material, insbesondere für Behälter (2) mit Dicht- und Abschirmfunktion für bestrahlte Brennelemente aus Kernreaktoren, wobei das Lager aus die Behälter (2) umschließenden Lagerelementen (23) besteht, und die Lagerelemente (23) aus im Querschnitt runden oder eckigen, übereinandergesetzten Rohrabschnitten (5) und einem Deckel (6) zusammengesetzt sind, dadurch gekennzeichnet, daß mehrere Lagerelemente (23) über Verbindungselemente (20) zu Gruppen zusammengefasst, mit einer gemeinsamen abnehmbaren Betonplatte (21) bedeckt und von Strahlungsabschirmungsbarrieren umgeben sind.

2. Zwischenlager nach Anspruch 1, dadurch gekennzeichnet, daß die Rohrabschnitte (5) aus Beton bestehen.

3. Zwischenlager nach Anspruch 1 und 2, dadurch gekennzeichnet, daß die Rohrabschnitte (5) aus zylindermantelförmigen Kreisringen bestehen.

4. Zwischenlager nach Anspruch 1 bis 3, dadurch gekennzeichnet, daß der Deckel (6) gegenüber den Rohrabschnitten (5) einen Überstand aufweist.

5. Zwischenlager nach Anspruch 1 bis 4, dadurch gekennzeichnet, daß die Rohrabschnitte (5) und/oder der Deckel (6) aus Strahlenschutzbeton bestehen.

6. Zwischenlager nach Anspruch 1 bis 5, dadurch gekennzeichnet, daß der Deckel (6) kegelförmig ausgebildet ist.

7. Zwischenlager nach Anspruch 1 bis 6, dadurch gekennzeichnet, daß die Strahlenabschirmungsbarrieren aus Lagerelementen (23), die mit nichtradioaktivem Schüttgut (25) gefüllt sind, bestehen.

## Claims

1. Intermediate store for radioactive material, in particular for containers (2) having a sealing and shielding function for irradiated fuel elements from nuclear reactors, the store consisting of store elements (23) which surround the containers (2) and the store elements (23) being assembled from super-imposed tube sections (5) which are round or angular in cross-section and a lid (6), characterised in that several store elements (23) are assembled into groups by means of connecting slab (21) and surrounded by radiation shielding barriers.

2. Intermediate store according to claim 1, characterised in that the tube sections (5) are composed of concrete.

3. Intermediate store according to claims 1 and 2, characterised in that the tube sections (5) are composed of circular rings forming a cylindrical jacket

4. Intermediate store according to claims 1 to 3, characterised in that the lid (6) projects beyond the tube sections (5).

5. Intermediate store according to claims 1 to 4, characterised in that the tube sections (5) and/or the cover (6) are composed of radiation shielding concrete.

6. Intermediate store according to claims 1 to 5, characterised in that the lid (6) is conical in design.

7. Intermediate store according to claims 1 to 6, characterised in that the radiation shielding barriers consist of store elements (23) which are filled with nonradioactive bulk material (25).

## Revendications

1. Stockage intermédiaire pour matières radioactives, en particulier pour des récipients (2) ayant pour fonction une fermeture hermétique et de former un blindage pour des éléments combustibles nucléaires irradiés, provenant de réacteurs nucléaires, où le stockage est constitué d'éléments de stockage (23) enfermant le récipient (2), ces éléments de stockage (23) étant composés des sections tubulaires (5) superposées, dont la coupe transversale est ronde ou polygonale, et d'un couvercle, stockage caractérisé en ce que plusieurs éléments de stockage (23) sont assemblés en groupe au moyen d'organes de fixation (20) recouverts d'une plaque de béton (21) commune, amovible, et entourés de barrières de blindage contre le rayonnement.

2. Stockage intermédiaire suivant la revendication 1, caractérisé en ce que les sections tubulaires (5) sont faites de béton.

3. Stockage suivant les revendications 1 et 2, caractérisé en ce que les sections tubulaires (5) sont constituées par des anneaux circulaires en forme d'enveloppe cylindrique.

4. Stockage intermédiaire suivant les revendications 1 à 3, caractérisé en ce que le couvercle (6) présente une avancée en porte-à-faux par rapport aux sections tubulaires (5).

5. Stockage intermédiaire suivant les revendications 1 à 4, caractérisé en ce que les sections tubulaires (5) et/ou le couvercle (6) sont faits de béton protecteur contre l'irradiation.

6. Stockage intermédiaire suivant les revendications 1 à 5, caractérisé en ce que le couvercle (6) est réalisé en forme de cône.

7. Stockage intermédiaire suivant les revendications 1 à 6, caractérisé en ce que les barrières de blindage contre les radiations sont constituées par des éléments de stockage (23), qui sont remplis d'une matière en vrac non radio-active.

Fig. 1

Fig. 2

Fig. 3